# EUROPEAN PATENT APPLICATION

(11) **EP 4 428 938 A1**
(43) Date of publication of application: **11.09.2024**
(21) Application number: 21963590.1
(22) Date of filing: 11.11.2021
(51) Int. Cl.: H01M 4/13, H01M 4/62, H01M 4/64, H01M 10/0525

(54) **ELECTROCHEMICAL APPARATUS AND ELECTRONIC APPARATUS**

(71) Applicant: Ningde Amperex Technology Limited, Ningde, Fujian 352100 (CN)
(72) Inventor: LIU, Manman, Ningde, Fujian 352100 (CN); LIU, Tao, Ningde, Fujian 352100 (CN); ZHU, Rui, Ningde, Fujian 352100 (CN)
(74) Representative: Icosa
(86) International application number: PCT/CN2021/130043
(87) International publication number: WO 2023/082136

(57) **Abstract**

This application provides an electrochemical apparatus and an electronic apparatus. The electrochemical apparatus includes a negative electrode plate. The negative electrode plate includes a negative electrode current collector, a first coating, and a negative electrode active material layer. The first coating is disposed between the negative electrode current collector and the negative electrode active material layer. The first coating includes carbon nanotubes, a first binder, and a first dispersant, and a mass percentage of the carbon nanotubes in the first coating is 50% to 75%. In embodiments of this application, a first coating containing carbon nanotubes with a mass percentage of 50% to 75% is used, helping improve the impact resistance performance of the electrochemical apparatus.

## Description

### TECHNICAL FIELD

This application relates to the field of electrochemical energy storage, and in particular, to an electrochemical apparatus and an electronic apparatus.

### BACKGROUND

With the development and advancement of electrochemical apparatuses (for example, lithium-ion batteries), increasingly high requirements are imposed on cycling performance, energy density, and safety performance of the electrochemical apparatuses. Currently, to improve cycling performance of an electrochemical apparatus, typically a coating is disposed between a negative electrode current collector and a negative electrode active material layer of a negative electrode plate, to enhance an adhesion force between the negative electrode current collector and the negative electrode active material layer. However, the coating has a large thickness, usually greater than 2 µm, which is not conducive to increasing the energy density of the electrochemical apparatus. Therefore, further improvement is expected.

### SUMMARY

Some embodiments of this application provide an electrochemical apparatus. The electrochemical apparatus includes a negative electrode plate. The negative electrode plate includes a negative electrode current collector, a first coating, and a negative electrode active material layer. The first coating is disposed between the negative electrode current collector and the negative electrode active material layer. The first coating includes carbon nanotubes, and a mass percentage of the carbon nanotubes in the first coating is 50% to 75%.

In some embodiments, the first coating further includes a first binder and a first dispersant, a mass percentage of the first binder in the first coating is 25% to 45%, and a mass percentage of the first dispersant in the first coating is greater than 0 and less than or equal to 5%.

In some embodiments, a thickness of the first coating is 200 nm to 2 µm. In some embodiments, a thickness of the first coating is 800 nm to 1 µm.

In some embodiments, a diameter of the carbon nanotube is 2 nm to 2000 nm.

In some embodiments, in a Raman spectroscopy test, a value of I_{D}/I_{G} of the carbon nanotubes is greater than 1.4.

In some embodiments, in the Raman spectroscopy test, a value of I_{D}/I_{G} of the carbon nanotubes is less than or equal to 1.7.

In some embodiments, the electrochemical apparatus further includes a second coating. The negative electrode active material layer is located between the first coating and the second coating, the second coating includes carbon nanotubes, and a mass percentage of the carbon nanotubes in the second coating is 50% to 75%.

In some embodiments, the second coating further includes a second binder and a second dispersant, a mass percentage of the second binder in the second coating is 25% to 45%, and a mass percentage of the second dispersant in the second coating is greater than 0 and less than or equal to 5%.

In some embodiments, a thickness of the second coating is greater than 0 and less than or equal to 450 nm.

In some embodiments, the first binder and the second binder each independently include at least one of styrene-butadiene rubber, polyacrylic acid, polyvinyl alcohol, polyacrylate, or polyacrylonitrile.

In some embodiments, the first dispersant and the second dispersant each independently include at least one of sodium hydroxymethyl cellulose, lithium hydroxymethyl cellulose, or N-methylpyrrolidone.

In some embodiments, a resistance of the negative electrode plate is 90 mΩ to 1000 mΩ.

An embodiment of this application further provides an electronic apparatus, including the electrochemical apparatus according to any one of the foregoing embodiments.

In the embodiments of this application, a first coating containing carbon nanotubes with a mass percentage of 50% to 75% is used, helping improve the impact resistance performance of the electrochemical apparatus.

### BRIEF DESCRIPTION OF DRAWINGS

FIG. 1 is a schematic cross-sectional view of a negative electrode plate in a width direction according to some embodiments of this application.
FIG. 2 is a schematic cross-sectional view of a negative electrode plate in a width direction according to some other embodiments of this application.

### DETAILED DESCRIPTION OF EMBODIMENTS

The following embodiments may allow persons skilled in the art to understand this application more comprehensively, but impose no limitation on this application in any manner.

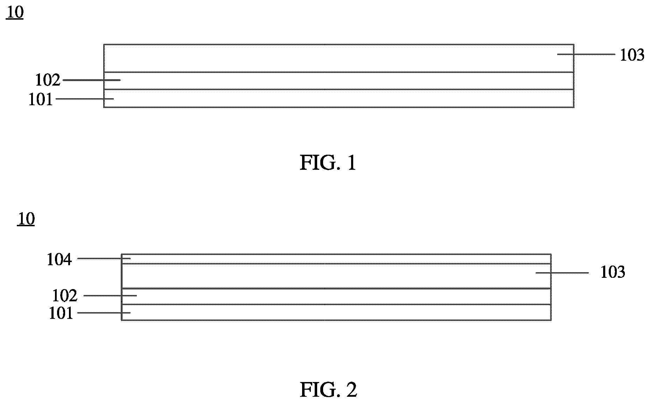

Some embodiments of this application provide an electrochemical apparatus. The electrochemical apparatus includes a negative electrode plate. FIG. 1 is a schematic cross-sectional view of a negative electrode plate 10 in a width direction according to some embodiments. The negative electrode plate 10 includes a negative electrode current collector 101, a first coating 102, and a negative electrode active material layer 103. The first coating 102 is disposed between the negative electrode current collector 101 and the negative electrode active material layer 103. It should be understood that although in FIG. 1, the first coating 102 and the negative electrode active material layer 103 are only on one side of the negative electrode current collector 101, this is merely an example. The negative electrode active material layer 103 may be located on both sides of the negative electrode current collector 101, and the first coating 102 can separate the negative electrode active material layer 103 and the negative electrode current collector 101 on both sides.

In some embodiments, the first coating 102 includes carbon nanotubes. In some embodiments, the carbon nanotube may include at least one of a single-walled carbon nanotube or a multi-walled carbon nanotube. In some embodiments, a mass percentage of the carbon nanotubes in the first coating is 50% to 75%. In some embodiments, the first coating 102 further includes a first binder and a first dispersant, a mass percentage of the first binder in the first coating 102 is 25% to 45%, and a mass percentage of the first dispersant in the first coating is greater than 0 and less than or equal to 5%. With the use of the carbon nanotubes (CNT) in the first coating 102, the CNTs conduct electricity through the tube wall, resulting in a large resistance of the first coating 102. During normal charge and discharge, electrons continuously flow in the tube wall direction, providing a stable power supply. Apparently, direct current resistance (DCR) shows slight loss, and other performances remain normal. During the impact safety performance test, the electrochemical apparatus is short-circuited at the moment of being hit by the rod. Typically, a large number of electrons flow, producing significant heat, causing the electrochemical apparatus to burn. However, because the CNTs conduct electricity through the tube wall along a long path, the massive electron flow cannot immediately pass through the CNTs to result in uncontrollable significant heat production. At the moment when the rod hits, the current density on the negative electrode current collector 101 is low, thereby reducing heat accumulation and improving the impact resistance performance. When the mass percentage of the carbon nanotubes in the first coating 102 is less than 50%, the electrical performance of the first coating 102 is affected. This is not conducive to improving the overall electrical performance of the electrochemical apparatus. When the mass percentage of the carbon nanotubes in the first coating 102 is greater than 75%, an excessively high mass percentage of the carbon nanotubes decreases the mass percentage of the binder, which is not conducive to the stable adhesion between the negative electrode current collector 102 and the negative electrode active material layer 103. In addition, due to the excessively high mass percentage of the carbon nanotubes, when the electrochemical apparatus is subjected to impact, the massive electron flow can still pass through the CNTs, producing significant heat and causing loss of control, which is not conducive to improvement of the impact resistance performance of the electrochemical apparatus.

In some embodiments, a thickness of the first coating 102 is 200 nm to 2 µm. The thickness described herein and hereinafter refers to an average thickness. An excessively small thickness of the first coating 102 is not conducive to the stable adhesion between the negative electrode current collector 102 and the negative electrode active material layer 103. An excessively large thickness of the first coating 102 is not conducive to increasing the energy density of the electrochemical apparatus. In some embodiments, a thickness of the first coating 102 is 800 nm to 1 µm. This can achieve stable adhesion between the negative electrode current collector 102 and the negative electrode active material layer 103 and minimize the adverse effect on the energy density of the electrochemical apparatus.

In some embodiments, a diameter of the carbon nanotube is 2 nm to 2000 nm. If the diameter of the carbon nanotube is excessively large, the thickness of the first coating 102 is typically required to be large either. This is not conducive to increasing the energy density of the electrochemical apparatus and improving electrical performance of the electrochemical apparatus. If the diameter of the carbon nanotube is excessively small, the path of current in the carbon nanotubes is reduced, losing the function of the carbon nanotubes in improving the impact resistance performance. In some embodiments, a diameter of the carbon nanotube is 2 nm to 200 nm. This can improve the impact resistance performance of the electrochemical apparatus and minimize the adverse effect on the energy density of the electrochemical apparatus.

In some embodiments, in a Raman spectroscopy test, a value of I_{D}/I_{G} of the carbon nanotubes is greater than 1.4. In represents an intensity of a peak at 1350 cm⁻¹ in the Raman spectrum, and I_{G} represents an intensity of a peak 1580 cm⁻¹ at in the Raman spectrum. A value of I_{D}/I_{G} reflects a graphitization degree of the CNTs. A larger value of I_{D}/I_{G} reflects a lower graphitization degree and a larger defect of the CNT structure. To minimize the loss of the initial coulombic efficiency of the electrochemical apparatus, the graphitization degree of the CNTs is reduced to reduce the lithiation performance of the CNTs, so as to alleviate the decrease in the initial coulombic efficiency of the electrochemical apparatus. In some embodiments, in the Raman spectroscopy test, a value of I_{D}/I_{G} of the carbon nanotubes is less than or equal to 1.7 For example, the value of I_{D}/I_{G} of the carbon nanotubes may be 1.45, 1.5, 1.55, 1.6, 1.65, 1.7, or the like.

In some embodiments, as shown in FIG. 2, the negative electrode plate 10 further includes a second coating 104, and the negative electrode active material layer 103 is located between the first coating 102 and the second coating 104. It should be noted that although FIG. 2 only shows the first coating 102, the negative electrode active material layer 103, and the second coating 104 on one side of the negative electrode current collector 101, the first coating 102, the negative electrode active material layer 103, and the second coating 104 may also be provided on the other side of the negative electrode current collector 101, and corresponding layers may be symmetrically arranged with respect to the negative electrode current collector 101. In some embodiments, the second coating 104 includes carbon nanotubes. In some embodiments, the carbon nanotube may include at least one of a single-walled carbon nanotube or a multi-walled carbon nanotube. In some embodiments, a mass percentage of the carbon nanotubes in the second coating 104 is 50% to 75%. In some embodiments, the second coating 104 further includes a second binder and a second dispersant, a mass percentage of the second binder in the second coating 104 is 25% to 45%, and a mass percentage of the second dispersant in the second coating is greater than 0 and less than or equal to 5%. The second coating 104 can further improve the impact resistance performance of the electrochemical apparatus. For relevant principle description, refer to the description of the first coating 102, and details are not repeated herein.

In some embodiments, a thickness of the second coating 104 is greater than 0 and less than or equal to 450 nm. The thickness described herein and hereinafter refers to an average thickness. An excessively large thickness of the second coating 104 is not conducive to increasing the energy density of the electrochemical apparatus. In some embodiments, the thickness of the second coating 104 is greater than or equal to 50 nm and less than or equal to 350 nm. In some embodiments, the thickness of the second coating 104 is greater than or equal to 100 nm and less than or equal to 250 nm. This can achieve good balance between the impact resistance performance and energy density of the electrochemical apparatus.

In some embodiments, the first binder and the second binder each independently include at least one of styrene-butadiene rubber, polyacrylic acid, polyvinyl alcohol, polyacrylate, or polyacrylonitrile. In some embodiments, the first dispersant and the second dispersant each independently include at least one of sodium hydroxymethyl cellulose, lithium hydroxymethyl cellulose, or N-methylpyrrolidone.

In some embodiments, a resistance of the negative electrode plate 10 is 90 mΩ to 1000 mΩ. An excessively small resistance of the negative electrode plate 10 is not conducive to improving the impact resistance performance of the electrochemical apparatus. An excessively large resistance of the negative electrode plate 10 is not conducive to improving the rate performance of the electrochemical apparatus.

In some embodiments, the negative electrode active material layer may include a negative electrode active material, a conductive agent, and a binder. In some embodiments, the negative electrode active material may include at least one of graphite, silicon, silicon oxide, or silicon carbide. In some embodiments, the conductive agent in the negative electrode active material layer may include at least one of conductive carbon black, Ketjen black, laminated graphite, graphene, carbon nanotubes, or carbon fiber. In some embodiments, the binder in the negative electrode active material layer may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the negative electrode active material, the conductive agent, and the binder in the negative electrode active material layer may be (78-98.5):(0.1-10):(0.1-10). It should be understood that the foregoing description is a merely example. Any other appropriate materials and mass ratios may be used. In some embodiments, the negative electrode current collector may be at least one of a copper foil current collector, a nickel foil current collector, or a carbon-based current collector.

In some embodiments, the electrochemical apparatus may include an electrode assembly, and the electrode assembly includes a positive electrode plate, a negative electrode plate, and a separator disposed between the positive electrode plate and the negative electrode plate. In some embodiments, the negative electrode plate is any one of the foregoing negative electrode plates.

In some embodiments, the electrochemical apparatus includes a lithium-ion battery, but this application is not limited thereto. In some embodiments, the electrochemical apparatus may further include an electrolyte. The electrolyte may be one or more of gel electrolyte, solid electrolyte, and liquid electrolyte.

In some embodiments, the electrolyte includes at least one of fluoroether, fluoroethylene carbonate, or ether nitrile. In some embodiments, the electrolyte further includes lithium salt. The lithium salt includes lithium bis(fluorosulfonyl)imide and lithium hexafluorophosphate. A concentration of the lithium salt is 1 mol/L to 2 mol/L, and a molar ratio of the lithium bis(fluorosulfonyl)imide to the lithium hexafluorophosphate is 0.05 to 4.

In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments, the positive electrode plate includes a positive electrode current collector and a positive electrode active material layer disposed on the positive electrode current collector, and the positive electrode active material layer may include a positive electrode active material. In some embodiments, an example of the positive electrode active material includes at least one of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate oxide, lithium nicotinate, lithium nickel cobalt manganate, lithium-rich manganese-based material, or lithium nickel cobalt aluminate. In some embodiments, the positive electrode active material layer may further include a conductive agent. In some embodiments, the conductive agent in the positive electrode active material layer may include at least one of conductive carbon black, Ketjen black, laminated graphite, graphene, carbon nanotubes, or carbon fiber. In some embodiments, the positive electrode active material layer may further include a binder. The binder in the positive electrode active material layer may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the positive electrode active material, the conductive agent, and the binder in the positive electrode active material layer may be (80-99):(0.1-10):(0.1-10). In some embodiments, a thickness of the positive electrode active material layer may be 10 µm to 500 µm. It should be understood that the foregoing description is a merely example, and any other proper material, thickness, and mass percentage may be used for the positive electrode active material layer.

In some embodiments, the positive electrode current collector may be an Al foil current collector, or certainly may be another current collector commonly used in the art. In some embodiments, a thickness of the positive electrode current collector may be 1 µm to 50 µm. In some embodiments, the positive electrode active material layer may be applied onto only a partial region of the current collector of the positive electrode plate.

In some embodiments, the separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Especially, polyethylene and polypropylene have a good effect on preventing short circuits and can improve stability of a battery through a shutdown effect. In some embodiments, the thickness of the separator ranges from approximately 5 µm to 50 µm.

In some embodiments, a surface of the separator may further include a porous layer. The porous layer is disposed on at least one surface of the separator. The porous layer includes inorganic particles and the binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01 µm to 1 µm. The binder in the porous layer is selected from at least one of polyvinylidene fluoride, vinylidene fluoride-hexafluoropropylene copolymer, polyamide, polyacrylonitrile, polyacrylate, polyacrylic acid, polyacrylic salt, carboxymethyl cellulose sodium, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance the adhesion between the separator and the electrode plate.

In some embodiments of this application, an electrode assembly of the electrochemical apparatus is a wound electrode assembly, a laminated electrode assembly, or a folded electrode assembly. In some embodiments, the positive electrode plate and/or the negative electrode plate of the electrochemical apparatus may be a multi-layer structure formed through winding or lamination, or may be a single-layer structure formed by stacking a single layer of positive electrode, a separator, and a single layer of negative electrode.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, so that the lithium-ion battery is prepared. Then, the prepared lithium-ion battery is subjected to performance tests.

Those skilled in the art will understand that the method for preparing the electrochemical apparatus (for example, the lithium-ion battery) described above is only an embodiment. Without departing from the content disclosed in this application, other methods commonly used in the art may be used.

An embodiment of this application further provides an electronic apparatus including the foregoing electrochemical apparatus. The electronic apparatus in this embodiment of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, a lithium-ion capacitor, and the like.

Some specific examples and comparative examples are listed below to better describe this application. Lithium-ion batteries are used as examples.

### Example 1

### Preparation of positive electrode plate

A positive electrode active material lithium cobalt oxide (LiCoO₂), conductive carbon black (Super P), and polyvinylidene fluoride (PVDF) were mixed at a weight ratio of 97.5:1:1.5, added N-methylpyrrolidone (NMP) with a solvent, and well stirred to prepare a slurry. The slurry (with solid content of 75wt%) was uniformly applied onto a 10 µm-thick positive electrode current collector aluminum foil, with a coating thickness of 80 µm. The aluminum foil was dried at 85°C. Then, after cold pressing, cutting, and slitting, drying was performed in vacuum at 85°C for 4 h to obtain a positive electrode plate.

### Preparation of negative electrode plate

64.5wt% of CNTs, 32.3wt% of PVDF, and 3.2wt% of carboxymethyl cellulose sodium were placed in a stirring tank and dispersed uniformly. A certain amount of deionized water was added to accelerate the dispersion, so as to prepare a slurry. The slurry was applied onto a Cu foil of 6 µm using a gravure roller, with a coating thickness of 2 µm. Then the Cu foil was dried to produce a first coating. A value of I_{D}/I_{G} of the carbon nanotubes (CNTs) was 1.5.

Graphite, a binder styrene-butadiene polymer, and carboxymethyl cellulose sodium (CMC) were dissolved at a weight ratio of 97.3:1.5:1.2 in deionized water, to obtain a negative electrode slurry (with a solid content of 75wt%). The negative electrode slurry was applied onto the first coating, with a coating thickness of 50 µm, and the first coating was dried at 110°C. Then, after cold pressing, cutting, and slitting, drying was performed in vacuum at 120°C for 12 h to obtain a negative electrode plate.

### Preparation of separator

Aluminum oxide and polyvinylidene fluoride were mixed at a mass ratio of 90: 10 and dissolved in deionized water to form a ceramic slurry with a solid content of 50wt%. Next, the ceramic slurry was uniformly applied onto one surface of a porous substrate (polyethylene with a thickness of 7 µm, an average pore diameter of 0.073 µm, and a porosity of 26%) using the micro-gravure coating method, and then drying was performed to obtain a double-layer structure including a ceramic coating and the porous substrate, where a thickness of the ceramic coating is 50 µm.

Polyvinylidene fluoride (PVDF) and polyacrylate were mixed at a mass ratio of 96:4 and dissolved in deionized water to form a polymer slurry with a solid content of 50wt%. Then, the polymer slurry was uniformly applied onto two surfaces of the double-layer structure of the ceramic coating and the porous substrate using the micro-gravure coating method, and drying was performed to obtain a separator, where a thickness of a single layer of coating formed by the polymer slurry was 2 µm.

### Preparation of electrolyte

In a dry argon atmosphere glove box, ethylene carbonate (EC), ethyl methyl carbonate (EMC), and diethyl carbonate (DEC) were mixed at a mass ratio of EC:EMC:DEC=3:5:2. Then, the mixture was added with lithium salt LiPF₆ and fully mixed to obtain an electrolyte. A concentration of LiPF₆ was 1.15 mol/L.

### Preparation of lithium-ion battery

The positive electrode, the separator, and the negative electrode were stacked in order, so that the separator was sandwiched between the positive and negative electrodes for separation. The stack was wound to obtain an electrode assembly. The electrode assembly was put in an outer package aluminum-plastic film and dehydrated at 80°C. Then, the foregoing electrolyte was injected and packaging was performed, followed by processes such as formation, degassing, and trimming to obtain a lithium-ion battery.

For other examples and comparative examples, parameters were changed based on steps in example 1. Specific changed parameters are described below.

In examples 2 to 11, the thickness of the first coating was different from that in example 1 and other parameters were the same as those in example 1.

In examples 12 to 14, the thickness of the first coating was different from that in example 1, a second coating was applied onto a surface of the negative electrode active material layer, and the second coating included the same components as the first coating. A thickness of the second coating in example 12 was 200 nm, a thickness of the second coating in example 13 was 450 nm, and a thickness of the second coating in example 14 was 600 nm. Other parameters were the same as those in example 1.

In examples 15 to 18, the thickness of the first coating was different from that in example 1, an amount of each component of the first coating was different from that in example 1, and other parameters were the same as those in example 1. In comparative example 1, CNTs were replaced with graphite, and other parameters were the same as those in example 1.

The following describes methods for testing various parameters of samples in each example of this application.

### Method for testing amount of carbon nanotubes

The mass percentage could be obtained through quantitative thermogravimetric analysis (TG) based on an area of a peak. A primer material was dried and placed in a heat-resistant container, and the container was placed in a high-temperature furnace with programmable temperature control. The substance under test was suspended on a balance with high sensitivity and precision. During heating or cooling, the weight of the substance under test changed due to reaction, causing a change relationship between the mass of the primer material and temperature. The mass percentage was obtained based on the area of a fitted peak.

### Test for I_{D}/I_{G} value of carbon nanotubes:

A surface defect degree of a sample was tested using a laser microscope confocal Raman spectrometer, and a ratio of an intensity In of a peak at 1350 cm⁻¹ to an intensity I_{G} of a peak at 1580 cm⁻¹ of the sample, I_{D}/I_{G}, was used to represent the surface defect degree of the sample. Each sample was tested at multiple potentials, and a standard deviation of the potentials was used to represent uniformity of surface defect degrees in different regions. The average value and standard deviation of the I_{D}/I_{G} value of the carbon nanotubes were obtained using the following method: Unsieved carbon nanotubes were taken, 100 points were tested to obtain corresponding I_{D}/I_{G} values, and the average value and standard deviation of these 100 values were calculated.

### Adhesion force test:

The brand of the instrument used for the adhesion force test was Instron, and the model was 33652. The negative electrode plate (width 30 mm×length (100 mm to 160 mm)) was taken and fixed on a steel plate using a double-sided adhesive tape (model: 3M9448A, width 20 mm×length (90 mm to 150 mm)). A paper tape of the same width as the negative electrode plate was fixed to one side of the negative electrode plate using the adhesive tape. A tensile machine limit block was adjusted to the proper position, and the paper tape was folded upward and slid by 40 mm at a speed of 50 mm/min. The adhesion force of the negative electrode plate was tested at 180° (that is, stretched in the opposite direction).

### Impact resistance test:

The lithium-ion battery was pretreated and tested at a temperature of 25°C±5°C. The lithium-ion battery was charged to a full-charge voltage at a current of 0.5C and to 0.05C at a constant voltage. The voltage and internal resistance before test were recorded and the appearance was checked. Then the sample was placed on the steel plate (with a thickness greater than or equal to 5 cm), a rod (ϕ15.8±0.1 mm) was placed in the middle of the sample, and the width surface was tested. A hammer of 9.1±0.1 Kg was left to fall vertically in a free state at a height of 61±2.5 cm from an intersection of the rod and the sample, and the test was stopped after the surface temperature of the lithium-ion battery rose by 10°C. (The test was stopped after 5 min of data acquisition) After the test ended, the appearance was checked. The battery passed the test if no combustion and explosion occurred.

### Cycling performance test:

At a test temperature of 25°C±2°C, the battery was charged to a full-charge voltage at a constant current of 0.7C and to 0.05C at a constant voltage, and was left standing for 5 min. Then, the battery was discharged to 3.0 V at 0.5C. A capacity obtained in this step was the initial capacity. Then, a 0.7C charge and 0.5C discharge cycling test was performed. The capacity retention rate after 800 cycles at 25°C was recorded as the cycling performance of the lithium-ion battery.

DCR test procedure:
(1) left standing for 4 h in a low-temperature box at -20°C;
(2) charged to 4.35 V at a constant current of 0.7C (that is, a current value at which a theoretical capacity was fully discharged within 1.6 h) and then to 0.025C at a constant voltage of 4.35 V, and left in sleep mode for 10 min;
(3) discharged to 3.4 V at 0.1C and left in sleep mode for 5 min (an actual capacity was obtained in this step);
   DCR test at 25°C
(4) left in sleep mode for 5 min, charged to 4.35 V at a constant current of 0.7C, and charged to 0.025C at a constant voltage of 4.35 V (calculation was performed based on the actual capacity obtained in step 3);
(5) left in sleep mode for 10 min;
(6) discharged at 0.1C for 3 h (DCR at 70% SOC (the battery remaining capacity) was calculated based on the actual capacity obtained in step 3);
(7) discharged at 1C for 1s (sampling was performed for every 5 ms, and the capacity was calculated based on the marked capacity of the corresponding battery assembly);
(8) discharged at 0.1C for 5 h (DCR at 20% SOC was calculated based on the actual capacity obtained in step 3);
(9) discharged at 1C for 1s (sampling was performed for every 5 ms, and the capacity was calculated based on the marked capacity of the corresponding battery assembly); and
(10) discharged at 0.1C for 1 h (DCR at 10% SOC was calculated based on the actual capacity obtained in step 3).

Sheet resistance test:
(1) a sheet resistance was tested using a four-probe method;
(2) an electrode plate coated with a negative electrode slurry was cold pressed, left standing for 1 day in an environment of 25°C, and placed on a four-probe resistivity tester platform;
(3) the test sample was adjusted and fixed, and a knob was adjusted to adjust the probes and make them press against the sample surface; and
(4) test conditions were set, including relevant data such as test voltage, current, and probe distance, and output result was set to resistance, so that the resistance can be obtained.

Film detachment test:
(1) the battery was charged to 4.35 V at a constant current of 0.7C (that is, a current value at which a theoretical capacity was fully discharged within 1.6 h) and then to 0.025C at a constant voltage of 4.35 V, and left in sleep mode for 10 min;
(2) the lithium-ion battery was placed in a low humidity room and disassembled to expose the negative electrode interface; and
(3) observation was performed to check whether the negative electrode active material layer was separated from the first coating.

Deformation test:
(1) The battery was charged to 4.35 V at a constant current of 0.7C (that is, a current value at which a theoretical capacity was fully discharged within 1.6 h) and then to 0.025C at a constant voltage of 4.35 V;
(2) the Ni electrode tab of the lithium-ion battery was wrapped with a crepe paper tape, to prevent external short circuit of the lithium-ion battery;
(3) the lithium-ion battery was placed on a support gasket block under a 3D profilometer for measuring heights of the concave and convex points, and VR-3000 measurement software was run for low-magnification fine measurement; and
(4) a reference line was selected for observing deformation performance.

Table 1 shows parameters and evaluation results in examples 1 to 18 and comparative example 1.

**Table 1**

| | Mass percentage of carbon nanotubes in first coating | Mass percentage of binder PVDF in first coating | Mass percentage of carboxymethyl cellulose in first coating | Thickness of first coating | Thickness of second coating | Adhesion force of negative electrode plate | Any film detachment in negative electrode plate interface | Pass rate of impac t test | Capacity retention rate after 800 cycles at 20°C | Negative electrode plate deformed or not | Sheet resistance (mΩ) | DCR at 10% SOC at -20°C (mΩ) |
|---|---|---|---|---|---|---|---|---|---|---|---|---|
| Example 1 | 64.5% | 32.3% | 3.2% | 2 µm | 0 | 20N | No | 38/50 | 71.9% | No | 1347.3 | 280.682 |
| Example 2 | 64.5% | 32.3% | 3.2% | 1.5 µm | 0 | 17N | No | 36/50 | 75.2% | No | 1355.4 | 264.618 |
| Example 3 | 64.5% | 32.3% | 3.2% | 1.2 µm | 0 | 14N | No | 33/50 | 77.1% | No | 1168.6 | 257.727 |
| Example 4 | 64.5% | 32.3% | 3.2% | 1 µm | 0 | 11N | No | 29/50 | 80.0% | No | 976.5 | 240.177 |
| Example 5 | 64.5% | 32.3% | 3.2% | 900 nm | 0 | 10N | No | 26/50 | 83.9% | No | 747.9 | 232.392 |
| Example 6 | 64.5% | 32.3% | 3.2% | 800 nm | 0 | 10N | No | 22/50 | 85.2% | No | 520 | 220.54 |
| Example 7 | 64.5% | 32.3% | 3.2% | 700 nm | 0 | 9N | Slight film detachment | 19/50 | 88.2% | No | 438.9 | 178.197 |
| Example 8 | 64.5% | 32.3% | 3.2% | 600 nm | 0 | 8N | Slight film detachment | 16/50 | 90.5% | No | 206.2 | 175.266 |
| Example 9 | 64.5% | 32.3% | 3.2% | 450 nm | 0 | 8N | Slight film detachment | 10/50 | 92.3% | No | 140.7 | 162.467 |
| Example 10 | 64.5% | 32.3% | 3.2% | 200 nm | 0 | 5N | Intermediate film detachment | 4/50 | 93.3% | Slight deformation | 94 | 144.729 |
| Example 11 | 64.5% | 32.3% | 3.2% | 100 nm | 0 | 3N | Yes | 0 | Drastic capacity decrease | Deformed | 70 | Drastic capacity decrease |
| Example 12 | 64.5% | 32.3% | 3.2% | 450 nm | 200 nm | 8N | Slight film detachment | 20/50 | 85.5% | No | 827.6 | 238.676 |
| Example 13 | 64.5% | 32.3% | 3.2% | 450 nm | 450 nm | 8N | Slight film detachment | 27/50 | 80.4% | No | 999.8 | 245.879 |
| Example 14 | 64.5% | 32.3% | 3.2% | 450 nm | 600 nm | 8N | Slight film detachment | 30/50 | 78.9% | No | 1132.9 | 269.644 |
| Example 15 | 50% | 45% | 5% | 450 nm | 0 | 17N | No | 15/50 | 80.5% | No | 1269.3 | 291.665 |
| Example 16 | 55% | 40% | 5% | 450 nm | 0 | 12N | No | 13/50 | 85.1% | No | 1065.8 | 280.126 |
| Example 9 | 64.5% | 32.3% | 3.2% | 450 nm | 0 | 8N | Slight film detachment | 10/50 | 92.3% | No | 140.7 | 162.467 |
| Example 17 | 75% | 25% | 3.2% | 450 nm | 0 | 6N | Slight film detachment | 5/50 | 86.8% | Deformed | 675.1 | Deformed |
| Example 18 | 80% | 20% | 0 | 450 nm | 0 | 3N | Yes | 2/50 | Drastic capacity decrease | Deformed | 587.5 | Deformed |
| Comparativ e example 1 | Conductive carbon black (64.5%) | 32.3% | 0 | 450 nm | 0 | 10N | No | 0 | 85.9% | No | 240.6 | 196.607 |

Comparison between example 1 and comparative example 1 shows that carbon nanotubes being used in the first coating can significantly increase the pass rate of impact test, compared with the conventional graphite.

Comparison between examples 1 to 11 shows that an excessively small thickness of the first coating is likely to cause film detachment of the negative electrode plate. As the thickness of the first coating decreases, the adhesion force of the negative electrode plate and the pass rate of impact test also decrease, but the cycling performance of the electrochemical apparatus trends to be improved.

Comparison between examples 9 and 15 to 18 shows that when the mass percentage of the carbon nanotubes in the first coating is greater than 75%, film detachment and deformation after cycling occur, and the cycling capacity retention rate decreases rapidly. As the mass percentage of the carbon nanotubes in the first coating increases, the pass rate of impact test trends to decrease.

Comparison between examples 9 and 12 to 14 shows that formation of an extra second coating on the surface of the negative electrode plate can further increase the pass rate of impact test, and as the thickness of the second coating increases, the improvement effect is enhanced. However, when the thickness of the second coating is greater than 450 nm, the cycling capacity retention rate decreases below 80%.

The foregoing descriptions are only preferred examples of this application and explanations of the technical principles used. Persons skilled in the art should understand that the related scope disclosure in this application is not limited to the technical solutions formed by a specific combination of the foregoing technical characteristics, and should also cover other technical solutions formed by any combination of the foregoing technical features or their equivalent features. For example, the technical solution formed by replacement between the foregoing features and technical features having similar functions disclosed in this application.

## Claims

1. An electrochemical apparatus, comprising:
a negative electrode plate, wherein the negative electrode plate comprises a negative electrode current collector, a first coating, and a negative electrode active material layer, wherein the first coating is disposed between the negative electrode current collector and the negative electrode active material layer; and
the first coating comprises carbon nanotubes, a first binder, and a first dispersant, and a mass percentage of the carbon nanotubes in the first coating is 50% to 75%.

2. The electrochemical apparatus according to claim 1, wherein a thickness of the first coating is 200 nm to 2 µm.

3. The electrochemical apparatus according to claim 2, wherein the thickness of the first coating is 800 nm to 1 µm.

4. The electrochemical apparatus according to claim 1, wherein a diameter of the carbon nanotube is 2 nm to 2000 nm.

5. The electrochemical apparatus according to claim 1, wherein in a Raman spectroscopy test, a value of I_{D}/I_{G} of the carbon nanotubes is greater than 1.4.

6. The electrochemical apparatus according to claim 1, further comprising a second coating, wherein the negative electrode active material layer is located between the first coating and the second coating, the second coating comprises carbon nanotubes, and a mass percentage of the carbon nanotubes in the second coating is 50% to 75%.

7. The electrochemical apparatus according to claim 6, wherein a thickness of the second coating is greater than 0 and less than or equal to 450 nm.

8. The electrochemical apparatus according to claim 6, wherein the first binder and the second binder each independently comprise at least one of styrene-butadiene rubber, polyacrylic acid, polyvinyl alcohol, polyacrylate, or polyacrylonitrile.

9. The electrochemical apparatus according to claim 6, wherein the first dispersant and the second dispersant each independently comprise at least one of sodium hydroxymethyl cellulose, lithium hydroxymethyl cellulose, or N-methylpyrrolidone.

10. The electrochemical apparatus according to claim 1, wherein a resistance of the negative electrode plate is 90 mΩ to 1000 mΩ.

11. An electronic apparatus, comprising the electrochemical apparatus according to any one of claims 1 to 10.
